Europäisches Patentamt

European Patent Office

Office européen des brevets

(11) Publication number: **0 027 055**
**B1**

(12) **EUROPEAN PATENT SPECIFICATION**

(45) Date of publication of patent specification: **09.11.83**

(21) Application number: **80303545.0**

(22) Date of filing: **09.10.80**

(51) Int. Cl.³: **F 24 H 1/40, F 24 H 1/41, F 24 H 1/43, F 24 H 1/28, F 24 H 1/12, F 24 H 1/14, F 24 H 1/16, F 28 F 1/30, F 28 F 1/32**

(54) Hot-water boilers.

(30) Priority: **09.10.79 GB 7935071**

(43) Date of publication of application:
**15.04.81 Bulletin 81/15**

(45) Publication of the grant of the patent:
**09.11.83 Bulletin 83/45**

(84) Designated Contracting States:
**AT BE CH DE FR GB IT LI LU NL SE**

(56) References cited:
**BE - A - 816 160**
**DE - A - 2 049 958**
**DE - A - 2 727 796**
**DE - A - 2 734 975**
**DE - B - 1 111 794**
**DE - B - 2 441 706**
**DE - B - 2 557 569**
**DE - C - 600 108**
**DE - U - 1 909 407**
**DE - U - 7 014 691**
**DE - U - 7 538 839**
**FR - A - 2 106 010**

(73) Proprietor: **STELRAD GROUP LIMITED**
**Newtown Road**
**Henley-on-Thames Oxfordshire, RG9 1HL (GB)**

(72) Inventor: **Renshaw, Edward James**
**Bridgend, Haugh of Urr Castle Douglas**
**Kirkcudbrightshire Scotland (GB)**

(74) Representative: **Saunders, Harry**
**SAUNDERS & DOLLEYMORE 2 Norfolk Road**
**Rickmansworth Hertfordshire WD3 1JH (GB)**

(56) References cited:
**FR - A - 2 371 642**
**FR - E - 10 601**
**GB - A - 1 502 746**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Hot-water boilers

This invention relates to gas-fired hot-water boilers.

Various proposals have been described for achieving increased efficiency in hot water boilers. Such proposals have been many. The majority of these proposals fall into two categories. In the first of these categories, fuel such as gas is burnt at the bottom of one leg of a duct which is in the form of a very long, inverted U-tube. The hot combustion products (flue gases) pass up the first leg of the duct and then down the other, giving up heat, as they pass along it, to water within which the duct is immersed in the manner of an immersion heater. In various modifications of this arrangement, proposals have been made for increasing efficiency by spreading the delivery of the hot flue gases through several passes or by providing heavy insulation. In all cases this arrangement calls for a somewhat bulky water tank which forms the water container. The water is usually static in the tank, and the boiler is inevitably rather large.

There is considerable need for hot-water boilers of the highest achievable efficiency. This is due partly to ever-increasing fuel costs which dictate maximum economy in the use of fuel. Allied with this is the need to prevent wastage of heat, and this in turn has resulted in much attention being paid to the draughtproofing and thermal insulation of buildings. As the cost of providing insulation and draughtproofing increases, there is a need for the heating systems themselves to be of as low cost, both as to capital cost and running cost, as is compatible with reliability and safety. At the same time, there is continuing demand for central heating systems in dwellings and other buildings, and since many dwellings are very small (and the proportion of very small houses and apartments remains high, at least partly because of increasing building costs), the boilers of their central heating systems should be as small and compact as possible.

All of these considerations point to the need for small boilers of essentially simple construction, arranged to heat the smallest quantity of water required at any particular time, but capable of heating as much as may be needed. Above all, however, the best possible use must be made of the calorific value of the fuel. Thus, as far as gas-fired boilers are concerned, it is desirable to transfer the greatest practicable amount of heat from the flue gases to the water.

The second of the above-mentioned categories of proposal for achieving increased efficiency in hot-water boilers consists of a number of suggestions for arrangements in which the water is first heated in a primary heat exchanger by the hot flue gases, and is then subsequently reheated in a secondary heat exchanger or recuperator by the same gases before the latter are discharged to atmosphere.

In variations on such arrangements, other proposals have been made whereby the water is first preheated, in a secondary heat exchanger or economiser, by the cooler flue gases before passing through the primary heat exchanger. Among these proposals for a boiler having two heat exchangers is GB—A—1502746, which describes an arrangement wherein, in the recuperator only, water of combustion is allowed to condense from the hot flue gases. A boiler in which such condensation is arranged to take place during operation will be called herein a "condensing boiler". The secondary heat exchanger described in GB—A—1502746, and those generally described elsewhere, are of quite complex construction; furthermore there is often a quite complicated flow path for the water, or for the flue gases, or both. This in turn can give rise to problems of cleaning the boiler, quite apart from the relatively substantial capital cost of such arrangements.

Another arrangement that has been recently proposed comprises a flat gas burner whose flame impinges directly on a length of water tubing in a frame below which is a second length of water tubing, there being between the two layers of tubing a complex arrangement of baffles to ensure that the hot flue gases will linger for a sufficient length of time in the vicinity of the water tubes to give up as much as possible of their heat. The upper layer of tubing is subjected to the very fierce heat of the flame itself, and a suitable protective coating of refractory material has to be applied to those parts of the heat exchanger subjected to the high temperatures involved. This is a sophisticated variation of the concept of a "two-stage" heat exchanger discussed above, since the water is heated in what are, in effect, two separate heat exchangers in close proximity to each other.

A further arrangement, described in our WO—A—79/00726, comprises a toroidal heat exchanger of cast metal having a coaxial combustion chamber within which the cylindrical burner and a forced-draught fan may be coaxially disposed. The flue gases pass directly outwardly in a free path through radial channels formed by integral walls or fins of the heat exchanger matrix, giving up their heat to the water passing through the matrix in directions parallel to the axis, but without provision for condensation of water from the flue gases.

Yet another proposal is that described in GB—A—1325935, now assigned to the present Applicants. This specification describes a non-condensing boiler of high efficiency having a toroidal, fabricated heat exchanger provided with a large number of passes of water tubes, between which there is provided a matrix consisting of a multiplicity of balls. Flue gases generated in the coaxial combustion chamber are delayed in the vicinity of the water tubes by the balls which serve the function of a very closely-packed extended cooling surface. Whilst this boiler functions very efficiently, it has been found in practice that it is somewhat noisy (due to cavitation), and is hard to clean, besides being rather expensive. It also requires frequent maintenance because the balls tend to fall out of position.

It has already been recognised that as much as possible of the energy produced by burning gas in a boiler should be transferred to the water, and this involves reducing the temperature of the flue gases to as low a value as possible. Since, furthermore, the combustion of gas results in production of water vapour and the latent heat of vaporisation can be recovered if this vapour is condensed, it is desirable to achieve this if the latent heat can be readily transferred to the water being heated.

A principal object of the present invention is to provide a gas boiler capable of allowing such condensation to take place and the latent heat so released to be transferred to process water, but without the disadvantages inherent in known types of condensing boiler.

A further object is to achieve, in such a boiler, an essentially simple construction such that the flue gases and condensate can both pass freely through it.

Other important objectives are to provide such a boiler which is of high thermal efficiency combined with compactness, ease of cleaning, lightness of weight and relatively low first cost. Relatively low running cost, resulting from its simplicity of construction, low maintenance requirement and high efficiency, is a further object.

It is yet a further object of the invention to ensure that the boiler has the smallest practicable water storage capacity whilst at the same time ensuring that water, once heated, can leave the boiler as quickly as possible so as to reach the relevant heating element or elements of the central heating and domestic hot water system with the minimum of delay and with as little loss of heat as possible on the way. This is another reason why the heat exchanger (and the other water-carrying elements of the boiler) should preferably be of the simplest possible form.

The invention accordingly provides a gas-fired, condensing, hot-water boiler having a single or main heat exchanger comprising a combustion chamber and conduit means arranged for flow of water and of hot combustion products in direct contact with opposite sides of the walls of said conduit means and in a substantially cross-flow mode, so that in operation the combustion chamber and said water are separated only by the walls of the conduit means; a gas burner in or immediately adjacent to the heat exchanger, arranged to direct a gas flame directly towards the adjacent conduit means and in a direction or directions other than upwards; air inlet means including a fan for supplying a forced draught of air to the burner; and a flue gas outlet leading away from the combustion chamber, characterised in that a condensate drain is provided below the combustion chamber, the walls of the conduit means being as thin as is structurally possible, the heat exchanger being such that the path for the combustion products is a free path and is directed, otherwise than upwardly, towards the flue gas outlet, and the combustion chamber being substantially unencumbered below said single or main heat exchanger so as to provide a free downward escape path for water condensed in that heat exchanger towards the condensate drain.

It will be seen therefore, that in a boiler according to the invention, condensation is permitted to take place in the single heat exchanger. Thus a condensing boiler is provided in which a secondary heat exchanger, though it may be present in certain cases, is not in any way essential.

In the preferred form of the invention, the single heat exchanger comprises a helical coil, the burner being arranged coaxially with the coil to direct flame radially at the coil. This arrangement is found to be particularly easy to keep clean, besides being relatively inexpensive to make. The coil may be in the form of a plurality of coils interleaved with each other. Preferably it consists of a two-start coil.

The common axis of the heat exchanger coil and burner is preferably vertical, thus giving the best possibilities for evenness of burning and free escape of condensate as quickly as possible to the condensate drain.

In another form of boiler according to the invention, the single (or main) heat exchanger is open at top and bottom to allow free passage of hot combustion products straight through the heat exchanger, the conduit means being in the form of substantially-horizontal, parallel water tubes, the burner being immediately above said tubes and the condensate drain being below the tubes. An advantageous feature of this form of the boiler is a downwardly-convergent trough leading to the flue gas outlet and condensate drain. The trough may with advantage contain the single heat exchanger itself, thus combining the benefit of the trough with increased compactness.

In two further embodiments of boiler according to the invention, the single heat exchanger is in a very simple form comprising a multiplicity of plain water tubes. In one of these embodiments, the heat exchanger comprises the water tubes extending between a pair of parallel, upstanding header plates. In the other, the thin-walled conduit means comprise a plurality of vertical tubes for passing hot combustion products to a flue gas outlet chamber separated from a water heating space above it and through which the vertical tubes extend.

At least the casing and the heat exchanger of the boiler may be of aluminium, the heat exchanger being of fabricated construction. Other parts of the boiler, such as the flue gas outlet extending through the casing near the bottom of the latter, the air inlet ducting, the fan, and the burner, may also be of aluminium.

Boilers may be made according to the invention to be of unusually compact and lightweight construction; they are simple to install and to service. Such a boiler has been demonstrated to exhibit a thermal efficiency of up to about 90%, which compares very favourably with a typical thermal efficiency of 73—75% for a good-quality boiler of conventional type. Furthermore, boilers according to the invention can be readily designed so as to give high efficiency even though their maximum heat output may, in a typical small, modern, well-insulated building, need to be no greater than about 24000 kJ/h (22750 Btu/hr). However, the invention is equally applicable to boilers having very much higher outputs than this.

Various embodiments of the invention will now be described, by way of example only, with reference to the drawings of this Application, all of which are in a form simplified for clarity where necessary.

In the drawings:—

Figure 1 is a front elevation, taken in section on the line I—I in Figure 2, of a first embodiment of boiler according to the invention;

Figure 2 is a sectional side elevation taken on the line II—II in Figure 1;

Figure 3 is an enlarged diametral section of a small portion of finned water tube of the heat exchanger in one form;

Figure 4 is a similar view showing another form of finned water tube;

Figure 5 is a front elevation, taken in section on the line V—V in Figure 6, and showing a second embodiment;

Figure 6 is a sectional side elevation taken on the line VI—VI in Figure 5;

Figure 7 is a diagram illustrating one possible water flow arrangement in the main heat exchanger of the boiler shown in Figures 5 and 6;

Figure 8 is a sectional side elevation, taken on the line VIII—VIII in Figure 9 and showing a modified form of heat exchanger;

Figure 9 is a sectional plan view taken on the line IX—IX in Figure 8;

Figure 10 is a side elevation showing a further modified form of heat exchanger;

Figure 11 is a sectional front elevation, taken on the line XI—XI in Figure 12 and showing a further embodiment of boiler according to the invention;

Figure 12 is a sectional side elevation taken on the line XII—XII in Figure 11; and

Figure 13 is a view similar to Figure 11 but showing yet another embodiment.

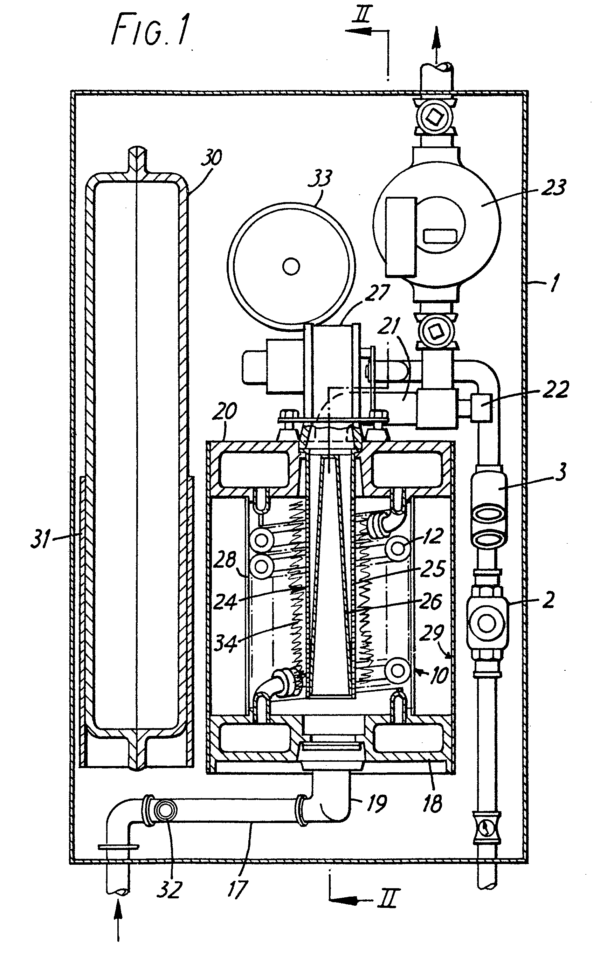

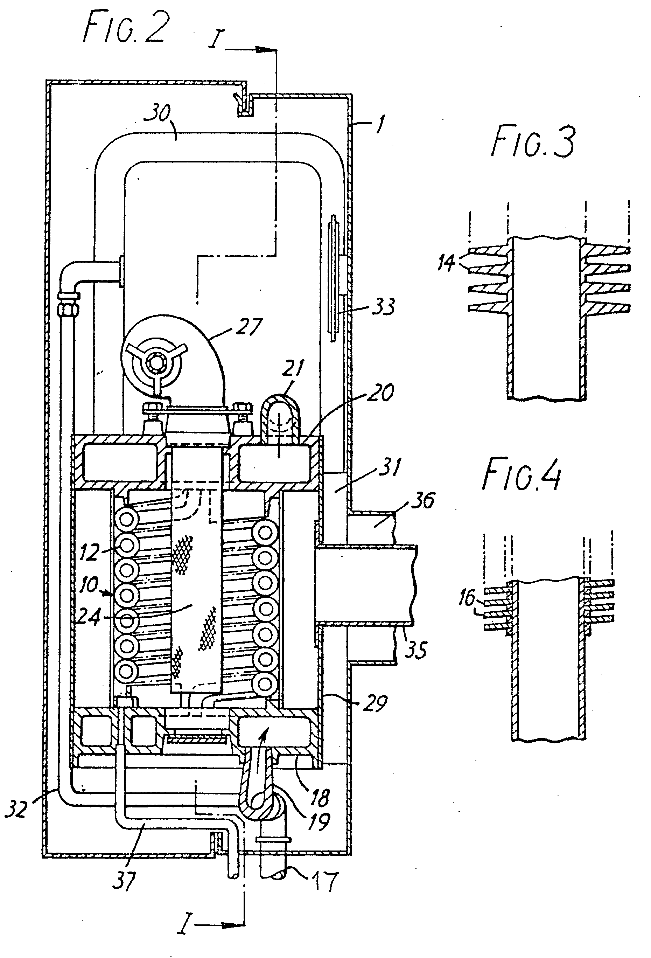

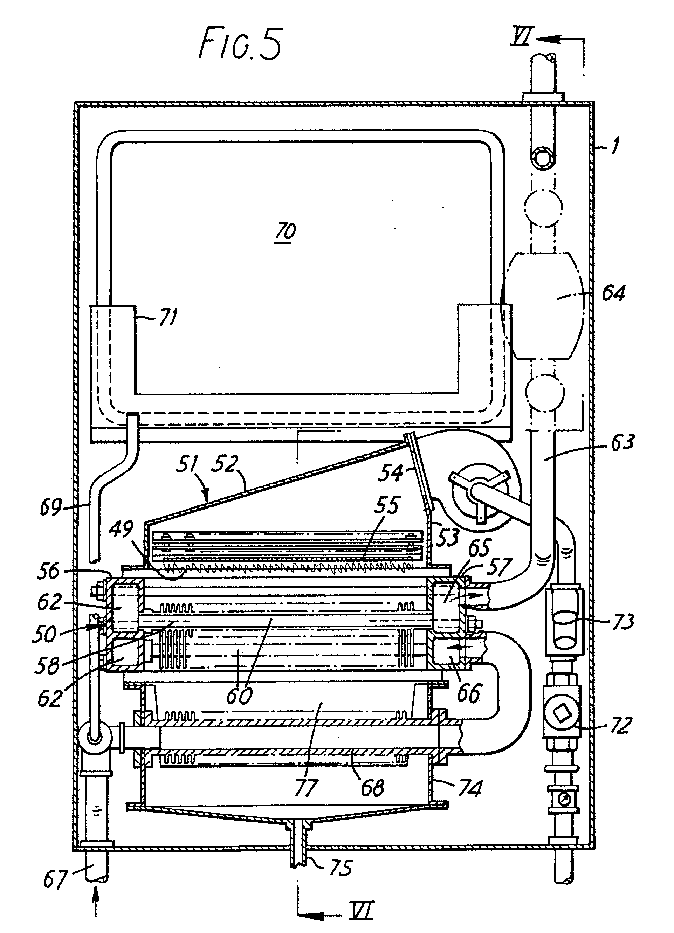

Referring to Figures 1 and 2, the boiler shown therein has a single heat exchanger 10 comprising a combustion chamber in which are arranged thin-walled conduit means in the form of a helical coil 12 of finned copper water tube. The term "thin-walled" as used herein means as thin as is structurally possible. This of course implies that any limitations, as to minimum thickness, imposed by safety requirements, will also be observed. This tube may be of the kind shown in Figure 3, having integral, radial fins 14, or it may be of the kind shown in Figure 4 in which the fins 16 are of the helical wound type, brazed to the tube. These represent, however, only two examples of suitable forms of water tube.

The coil 12 is a two-start coil, i.e. it comprises two coils of the same "hand" interleaved with each other. The top and bottom ends of the two coils are connected into an outlet manifold 20 and an inlet header 18, respectively. These headers are toroidal, the inlet header 18 being connected by a union 19 to a cold-water inlet pipe 17. The outlet header 20 is connected to an outlet pipe 21 which leads via a pressure-actuated safety valve 22 to a conventional circulating pump 23. The inlet pipe 17 and the delivery side of the pump 23 are connected in a central heating and domestic hot water system in known manner.

A burner 24 is arranged on the same vertical axis as the heat exchanger coil 12. This burner is of the cylindrical kind described and claimed in our GB—A—1 · 578 · 664, and comprises a perforated cylinder 25 closed at the bottom and containing a fixed cone 26, which reduces the cross-sectional area of the path of gas/air mixture passing down inside the burner as this mixture is depleted by burning at the surface of the cylinder 25. This arrangement ensures substantially even burning. The open top end of the burner 24 is connected to the delivery side of a forced-draught fan 27, which is mounted on top of the outlet header 20 with its outlet directly over the burner.

The heat exchanger 10 is completed by a cylindrical perforated screen 28 around the coil 12, to serve as a spreader for flue gas, and a cylindrical outer shroud 29. The heat exchanger is mounted in the boiler casing 1 by suitable conventional means not shown. The combustion chamber comprises the cylindrical space defined within the screen 28, between the headers 18 and 20.

The boiler shown in Figures 1 and 2 is intended for use in a sealed hot water system, for which purpose an expansion vessel 30 is mounted in the casing 1 by a bracket 31 and connected to the inlet pipe 17 by means of a pipe 32. A differential pressure valve 33 is also mounted in the casing 1.

In operation, gas is delivered via a gas regulator 2 and twin-solenoid valve 3 to the suction side of the fan 27, where it is pre-mixed with air and delivered to the burner 24. The flame 34 is directed in all radial directions directly towards the adjacent coil 12, so that the resulting flue gases heat the water passing upwardly through the latter, and follow a free path directly towards, and thence in direct contact with, the coil 12 (in what can be seen from Figures 1 and 2 to be a substantially cross-flow mode). This flue gas path is radially outward, and at no point is there any upward flow of flue gas in the heat exchanger. The flue gases pass out through the screen 28 to be collected and removed by a flue gas outlet 35, which in this example is part of a balanced flue unit including an air inlet annulus 36. The latter may be connected by suitable ducting (not shown) to the suction side of the fan.

The amount of water subjected to heating at any instant is the relatively small amount contained in the heat exchanger 10. It is thus readily possible to ensure that no more water is heated than may be required. At the same time, the heat from the flame is quickly absorbed by the heat exchanger and water, and the flue gas falls rapidly in temperature as it passes radially outwards. The gas and air flow rates are set so that the flue gas temperature falls to or below the value at which water of combustion will condense, such that such condensation takes place on the coil 12 and on the screen 28. Since, as can be seen from Figures 1 and 2, the combustion chamber is substantially unencumbered below the heat exchanger, the water condensate falls freely downwards to a condensate drain 37, below the combustion chamber and extending through the inlet header and out through the bottom of the boiler casing 1.

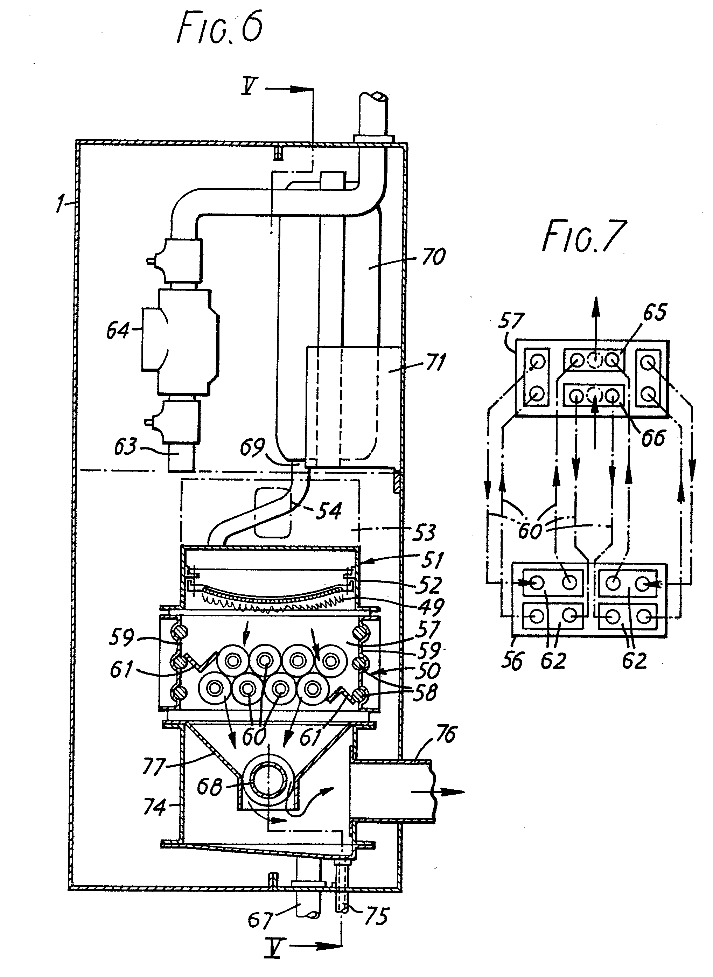

Referring now to Figures 5 and 6, the boiler shown in Figures 5 and 6 has a "flat-bed" main heat exchanger 50 having a flat type burner 51 mounted on top of it. The burner 51 has a casing 52 which tapers downwardly away from a rear wall 53 thereof. The fan, 54, is mounted on this wall and gas/air mixture is exhausted therefrom into the casing 52 through a port 54 in the rear wall 53. Burning of the flame 49 takes place on a perforated burner plate 55 facing downwardly towards the adjacent heat exchanger 50. This type of heat exchanger is also described and claimed in our above-mentioned GB—A—1578664; the decreasing cross-section of the interior of the burner casing 52 serves the same purpose as described above in respect of the cone 26 of the burner shown in Figures 1 and 2.

The heat exchanger 50 comprises two manifolds 56, 57 joined rigidly together by tie rods 58 and closed at front and rear by light shrouds 59. The space defined between the manifolds 56, 57 and shrouds 59 constitutes a combustion chamber of the main heat exchanger. Extending through this combustion chamber, between the manifolds 56 and 57 are eight thin-walled (as above defined), finned copper water tubes 60, which may for example be of either of the two kinds described above with reference to Figures 3 and 4. Flue gas is forced to pass downwardly over the water tubes 60, in cross-flow mode, by two baffles 61 which prevent the flue gas from bypassing the tubes.

The manifold 56 has four chambers 62, as shown in Figure 7 in which both the manifolds are shown diagrammatically as though viewed from the right-hand side of Figure 5. The manifold 57 also has four chambers. Each of the phantom lines in Figure 7 represents the appropriate one of the tubes 60, and the arrows thereon indicate the "four-pass" flow pattern of water through the main heat exchanger in this particular arrangement. It will however be understood that any desired flow pattern may be adopted by providing manifolds of suitable design and an appropriate number of tubes connecting them. Eight, as shown, is only one example of the number of tubes possible.

In this example, the upper centre chamber 65 of the manifold 57 is connected via an outlet pipe 63 to the circulating pump 64; whilst the lower centre chamber 66 is connected to the cold-water inlet pipe 67 from the central heating and domestic hot water system. This connection is made in this example via an economiser 68 in the form of a finned tube, but the economiser may if desired be omitted.

The inlet pipe 67 is connected by a pipe 69 to a sealed-system expansion vessel 70 carried by a bracket 71 in the boiler casing 1. It will of course be understood that these components would be omitted (in each of the embodiments) if the boiler is not required to work in a sealed system.

The fan is supplied with gas via a gas regulator 72 and twin-solenoid valve 73.

Secured below the main heat exchanger 50, and in free communication through the latter with the burner 51, is a lower casing 74 with a sloping bottom having a condensate drain 75. A flue gas outlet 76 extends from the rear of the casing 74. In the casing 74, and immediately below the main heat exchanger 50, is a downwardly convergent trough 77, open at the bottom to provide a path for collection of flue gases and of condensate forming on the heat exchanger tubes 60.

In operation, the flame 49 is directed at the tubes 60, and again the relatively small quantity of water in the heat exchanger is heated rapidly so that the flue gas temperature falls to a temperature such that water of combustion condenses in the main heat exchanger 50, to fall freely down the trough 77 to the drain 75. It is to be observed that the dimensions of the economiser 68 (if provided) are such that the free downward flow of condensate is substantially unencumbered thereby.

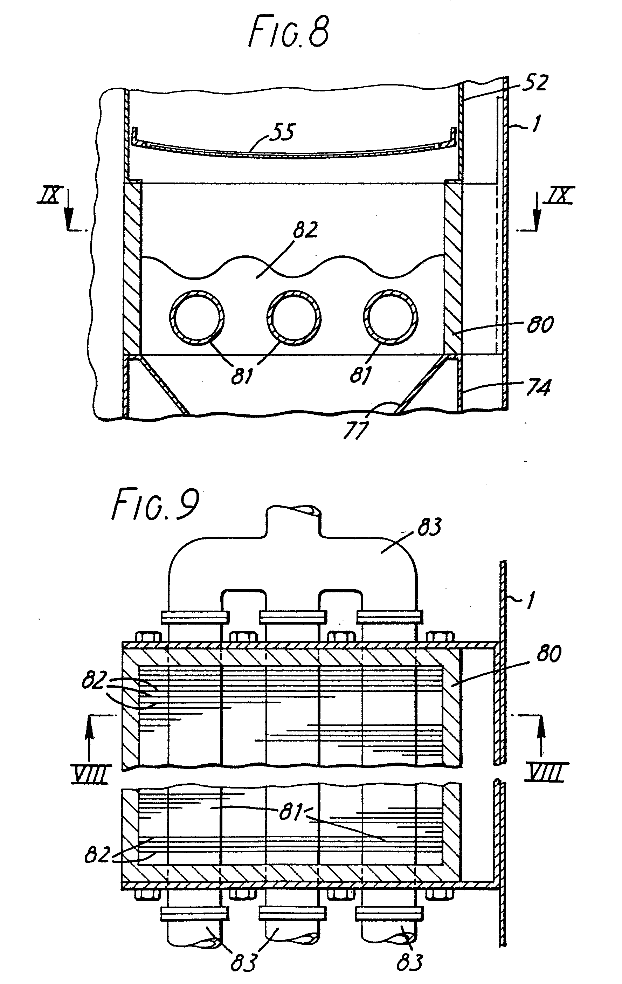

The single or main heat exchanger shown in Figures 8 and 9 differs from the main heat exchanger shown in Figures 5 and 6 in that it comprises a rectangular frame 80 upon which the burner casing 52 is fixed, and which in turn is fixed to the casing 74 with its trough 77. The three parallel heat exchanger tubes, 81, extend through this frame which has a multiplicity of thin, closely-spaced, transverse fins 82 which serve as an extended surface for the tubes 81. The latter are shown in a "single-pass" mode, connected by manifolds 83; but it will be understood that they may equally well be operated in double- or triple-pass modes by suitable alternative connections.

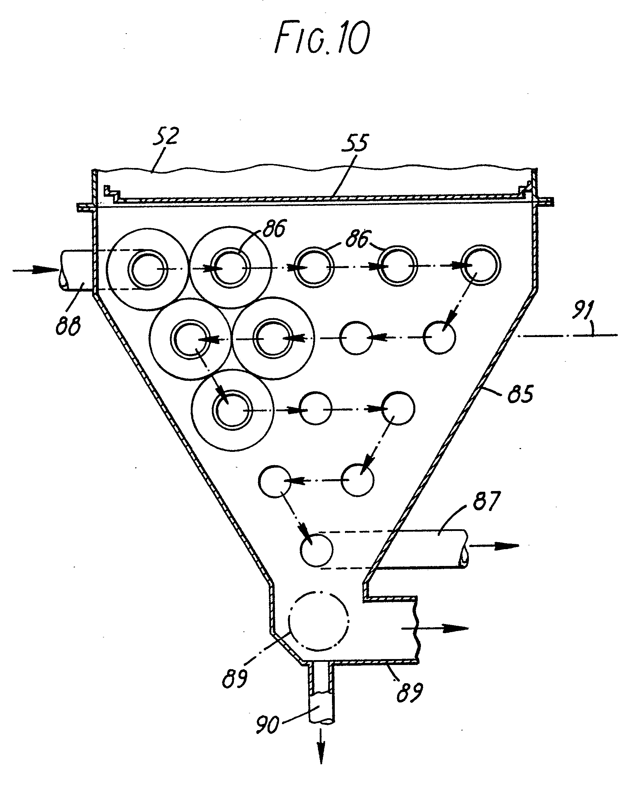

In Figure 10, the trough, 85, is shown with five rows of finned, thin-walled, copper water tubes 86 of the single heat exchanger extending between the ends of the trough, which may if desired be in the form of manifolds to effect the connections at the appropriate ends of the tubes 86 shown diagrammatically by arrows. Some of the tubes themselves are shown diagrammatically. The burner plate 55 is shown immediately above the top row of tubes 86 so that the trough 85 itself constitutes the combustion chamber. This row consists of five tubes, the number of tubes in each row decreasing by one tube down the trough, so that the last now comprises one tube. This last-mentioned tube, and one of those in the top row, are connected respectively to the hot-water outlet pipe 87 (and thence to the circulating pump not shown), and the cold-water inlet pipe 88. The flue gas outlet 89 extends from the bottom of the trough adjacent the condensate drain 90. An alternative position for the outlet 89 in an end wall of the trough, which constitutes the heat exchanger casing, is shown by a phantom circle.

The level at which condensation may be expected to commence as the flue gases, passing down the trough, become cooled, is indicated at 91. With a different flow pattern from the "fifteen-pass" pattern provided by the connections indicated, the level of commencement of condensation may of course be changed.

The trough or chamber 85 may be a simple plastics moulding.

The trough-shaped arrangement used as a chamber of the heat exchanger itself has the advantage that, as the flue gases yield heat, they become accelerated. This compensates for the reduced rate of heat transfer which results from the reduction in flue gas temperature, and so improves the heat transfer performance.

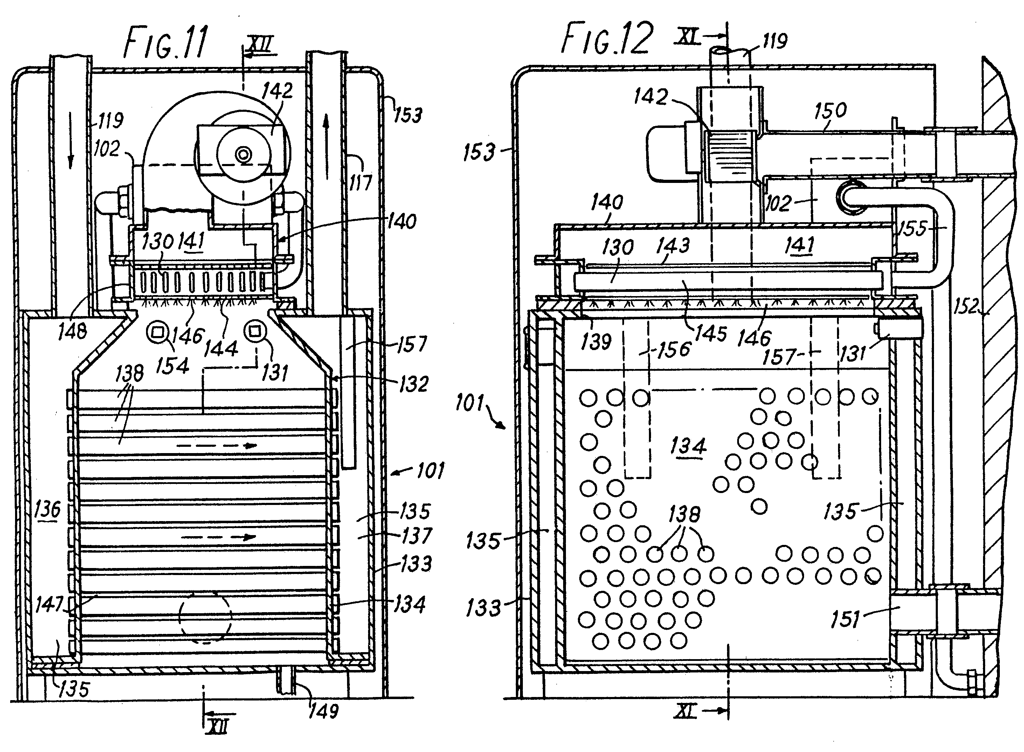

The boiler 101 shown in Figures 11 and 12 has a boiler gas valve unit 102 for controlling the supply of gas to a burner 130 of the boiler, an electronic direct-ignition igniter 131, and a heat exchanger 132 in which the water is heated and with which a hot water cylinder and/or radiators (as desired) may be connected in a closed circuit by pipework not shown. The boiler comprises a simple hollow aluminium casing 133 having six flat sides and an opening 139 of rectangular shape in its top. Welded to each of the longer sides of this opening is the top edge of a respective one of two opposed, generally-vertical tube plates 134 of the heat exchanger 132. The tube plates extend across the casing 133 between inner front and rear bulkheads 135 of the casing. The bulkheads 135 extend the full width of the casing, so that a water inlet chamber 136, and a water outlet chamber 137, defined between the respective tube plate 134 and the adjacent outer side wall of the casing, are not interconnected except through the heat exchanger. The tube plates carry a bank of parallel, single-pass, aluminium water tubes 138 which effect this interconnection. The boiler water outlet pipe 117 and return pipe 119 are connected into the top of the outlet and inlet chambers 137, 136 respectively.

The opening 139 in the top of the boiler casing is covered by an aluminium top housing 140 in which is an air inlet plenum chamber 141 supplied with combustion air by a forced-draught fan 142. The bottom of the plenum chamber consists of a perforated spreader plate 143, through which the air passes to the burner 130 through a mixing chamber 148. The burner is arranged immediately below the perforated spreader plate 143, and comprises a flat perforated burner plate 144 supplied with gas and air from above, the gas being distributed into the mixing chamber 148 by a gas manifold 145 of the burner. The flame 146 is directed downwardly into the combustion chamber or heating space 147 surrounding the heat exchanger water tubes 138. Water of combustion falls freely to the bottom of the boiler casing 133, to be removed by a condensate drain 149. The aluminium air inlet 150 to the fan, and the aluminium flue gas outlet 151, extend horizontally from the back of the boiler and can be vented directly through the adjacent wall 152 of the building. A simple, easily-removable shroud 153, which may for example be of glass-fibre reinforced resin material, is provided over the boiler.

The igniter 131, together with a flame detector 154 of any suitable known kind, are located in the rear of the boiler casing 133 immediately adjacent the burning zone.

The boiler has two thermostats, which are provided for safety purposes only and not for controlling the heating of water. These consist of a fixed-limit thermostat 156 which causes the gas supply to the burner to be shut off if the temperature of water in the boiler reaches a predetermined maximum safe value, and an overheat safety thermostat 157 which performs the same function (and may also shut off the electrical supply in the event that, for any reason, the boiler overheats, or fails to cool down after functioning or malfunctioning of the fixed-limit thermostat 56).

The gas burner manifold 145 is supplied with gas through a gas inlet pipe 155 from the boiler gas valve unit 102, which is mounted on top of the boiler casing 133.

Aluminium may be used for most of the components of the boiler not so far stated to be of this material, including the gas valve unit 102, burner plate 144, air spreader plate 143, gas manifold 145, gas pipe 155, and the rotor of the fan 142.

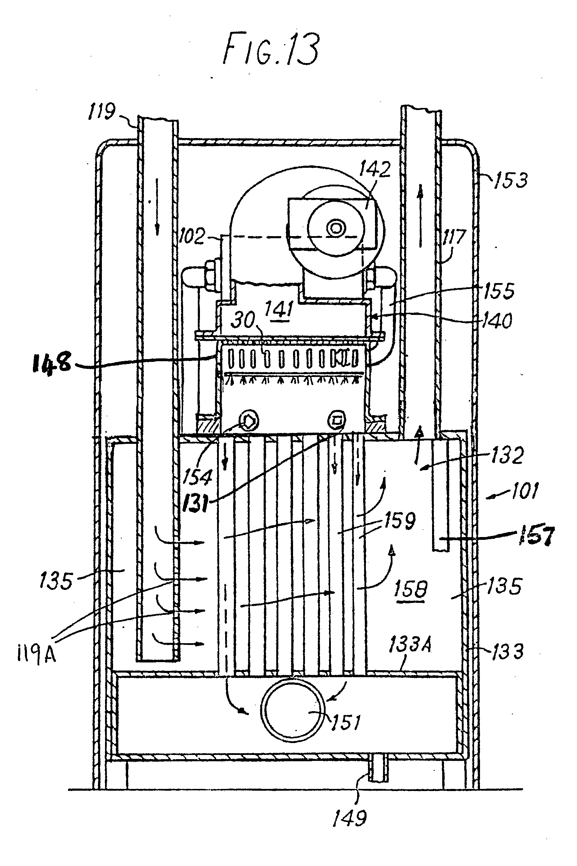

In the modified form of boiler shown in Figure 13, only the heat exchanger differs from that shown in Figures 11 and 12. In Figure 13, the tubeplates 134 are absent, so that water can flow freely from the return pipe 119 to the outlet pipe 117 through the heating chamber 158 surrounding a group of vertical flue tubes 159. The latter extend from the top of the casing 133 to an outlet manifold in the bottom of the casing leading to the flue gas outlet 151. The outlet manifold is separated from the heating chamber 158 by a horizontal plate 133A, and the return pipe 119 is extended into the chamber 158 and provided with lateral ports 119A to ensure relatively even discharge of water into the heating chamber. The casing 133 and flue tubes 159 constitute the heat exchanger in this instance, the interior of the flue tubes constituting the combustion chamber.

The igniting means of the boiler comprises an electronic direct-burner type of igniter in which a spark is produced between a pair of electrodes upon discharge of a capacitor. The remote thermostat or thermostats are electrically connected not only with the gas valve means but also with the igniter, so that upon the former being initially opened, the igniter is energised simultaneously.

The igniting means may, however, in suitable cases include a non-permanent pilot jet supplied in the conventional way with gas tapped from the supply upstream of the boiler gas valve means, through a pilot valve which is arranged to be open only when the igniter is energised and to close again upon de-energising of the igniter. The purpose of the pilot jet, if provided, is to provide a flame to light the burner, the pilot flame being itself established by the igniter. A pilot jet is however only necessary where, due to the layout or the burner design, the burner cannot be ignited reliably by direct ignition.

## Claims

1. A gas-fired, condensing, hot-water boiler, having a single or main heat exchanger (10, 50) comprising a combustion chamber and conduit means (12, 60, 81, 86, 138, 159) arranged for flow of water and of hot combustion products in direct contact with opposite sides of the walls of said conduit means and in a substantially cross-flow mode, so that in operation the combustion chamber and said water are separated only by the walls of the conduit means; a gas burner (24, 51, 130) in or immediately adjacent to the heat exchanger, arranged to direct a gas flame directly towards the adjacent conduit means and in a direction or directions other than upwards; air inlet means including a fan (27, 54, 142) for supplying a forced draught of air to the burner; and a flue gas outlet (35, 76, 89, 151) leading away from the combustion chamber, characterised in that a condensate drain (37, 75, 90, 149) is provided below the combustion chamber, the walls of the conduit means (12, 60, 81, 86, 138, 159) being as thin as is structurally possible, the heat exchanger being such that the path for the combustion products is a free path and is directed, otherwise than upwardly, towards the flue gas outlet, and the combustion chamber being substantially unencumbered below said single or main heat exchanger so as to provide a free downward escape path for water condensed in that heat exchanger towards the condensate drain.

2. A boiler according to Claim 1, characterised in that the heat exchanger conduit means (12, 60, 81, 86) comprises tubing having an extended surface (14, 16, 82).

3. A boiler according to Claim 1 or Claim 2, characterised in that the conduit means (12) comprises a helical coil, the burner (24) being arranged coaxially with the coil to direct flame radially at the coil.

4. A boiler according to Claim 3, characterised in that the helical coil (12) is in the form of a plurality of coils interleaved with each other.

5. A boiler according to Claim 3 or Claim 4, characterised in that the common axis of the heat exchanger coil (12) and burner (24) is vertical.

6. A boiler according to Claim 1 or Claim 2, characterised in that the heat exchanger (10; 50) has two headers (18, 20) or manifolds (56, 57) arranged one at each end of the conduit means (12, 60).

7. A boiler according to Claim 1 or Claim 2, characterised in that the said heat exchanger (50) is open at top and bottom to allow free passage of hot combustion products straight through it, the conduit means being in the form of substantially-horizontal, parallel water tubes (60; 81, 86), the burner (51) being immediately above said tubes and the condensate drain (75) being below the tubes.

8. A boiler according to Claim 7, characterised in that the water tubes (81) are arranged in a matrix comprising a multiplicity of closely-packed, upstanding parallel fins (82), all of which are intersected by the said water tubes to constitute a common extended surface therefor.

9. A boiler according to Claim 7 or Claim 8, characterised by, below the burner (51), a downwardly-convergent trough (77; 85) leading to the flue gas outlet (76, 89) and condensate drain (75; 90), the flue gas outlet and condensate drain leading directly away from the bottom of the convergent trough.

10. A boiler according to Claim 9, characterised in that the trough (85) contains the heat exchanger.

11. A boiler according to Claim 10, characterised in that the said water tubes (86) extend between the ends of the trough (85) and parallel to the convergent sides of the trough.

12. A boiler according to Claim 11, characterised in that the said water tubes (86) are arranged substantially in rows, each of which except the uppermost contains a smaller number of tubes than the next row above it.

13. A boiler according to Claim 12, characterised in that its water inlet (88) and outlet means (87) are each connected to a respective one of a said water tube (86) in the lowest row and a said water tube in the uppermost row, the said water tubes being interconnected at their ends so that water makes a succession of passes through the heat exchanger.

14. A boiler according to any one of Claims 7 to 13, characterised in that the said water tubes (60) are connected between a pair of manifolds (56, 57).

15. A boiler according to Claim 14, characterised in that the heat exchanger consists of said pair of manifolds (56, 57) joined together by horizontal tie rods (58) with the water tubes (60) extending between the manifolds.

16. A boiler according to Claim 1, characterised in that the heat exchanger comprises the water tubes (138) extending between a pair of parallel, upstanding header plates (134).

17. A boiler according to Claim 1, characterised in that the conduit means comprise a plurality of vertical tubes (159) for passing hot combustion products to said flue gas outlet (151), the latter being in a chamber separated from a water heating space (158) above it and through which the vertical tubes extend.

**Patentansprüche**

1. Gasgefeurter Kondensations-Heißwasserboiler, mit einem einzigen oder Haupt-Wärmetauscher (10, 50), der eine Verbrennungskammer und Leitungsmittel (12, 60, 81, 86, 138, 159) aufweist, die derart angeordnet sind, daß das Wasser und die heißen Verbrennungsprodukte in unmittelbarem Kontakt mit gegenüberliegenden Seiten der Wände der Leitungsmittel und in im wesentlichen Kreuzstrombetrieb strömen, so daß im Betrieb die Verbrennungskammer und das Wasser nur durch die Wände der Leitungsmittel getrennt sind, mit einem Gasbrenner (24, 51, 130) im oder dem Wärmetauscher unmittelbar benachbart und der derart angeordnet ist, daß die Gasflamme unmittelbar zum benachbarten Leitungsmittel und in eine von der aufwärtigen Richtung verschiedenen Richtung oder Richtungen gerichtet ist, mit Lufteinlaßmittel, die einem Saugluft zum Brenner liefernden Ventilator (27, 54, 142) aufweisen, und mit einem Rauchgasauslaß (35, 76, 89, 151) der von der Verbrennungskammer des Wärmetauschers wegführt, dadurch gekennzeichnet, daß ein Kondensatabfluß (37, 75, 90, 149) unterhalb der Verbrennungskammer vorgesehen ist, daß die Wände der Leitungsmittel (12, 60, 81, 86, 138, 159) so dünn wie konstruktiv möglich sind, daß der Wärmetauscher derart ist, daß der Weg für die Verbrennungsprodukte frei ist und in anderer Weise als aufwärts zum Rauchgasauslaß gerichtet ist, und daß die Verbrennungskammer im wesentlichen ungehindert unterhalb des einzigen bzw. Hauptwärmetauschers zugänglich ist, derart, daß ein freier Auslaßweg nach unten für das im Wärmetauscher kondensierte Wasser zum Kondensatabfluß hin vorgesehen ist.

2. Boiler nach Anspruch 1, dadurch gekennzeichnet, daß die Wärmetauscher-Leitungsmittel (12, 60, 81, 86) Röhren mit vergrößerter Oberfläche (14, 16, 82) aufweisen.

3. Boiler nach Anspruch 1 oder 2, dadurch gekennzeichnet, daß die Leitungsmittel (12) eine schraubenförmige Rohrschlange aufweisen, und daß der Brenner (24) koaxial zur Schlange angeordnet und die Flamme radial auf die Schlange gerichtet ist.

4. Boiler nach Anspruch 3, dadurch gekennzeichnet, daß die schraubenförmige Rohrschlange (12) in der Form einer Vielzahl von ineinander geschachtelten Schlangen ausgebildet ist.

5. Boiler nach Anspruch 3 oder 4, dadurch gekennzeichnet, daß die gemeinsame Achse der Wärmetauscherschlange (12) und des Brenners (24) vertikal ist.

6. Boiler nach Anspruch 1 oder Anspruch 2, dadurch gekennzeichnet, daß der Wärmetauscher (10; 50) zwei Sammelrohre (18, 19) oder Rauchgassammler (56, 57) aufweist, von denen jeweils einer an jedem Ende der Leitungsmittel (12, 60) angeordnet ist.

7. Boiler nach Anspruch 1 oder 2, dadurch gekennzeichnet, daß der Wärmetauscher (50) oben und unten offen ist und so den freien Durchgang der heißen Verbrennungsprodukte geradewegs durch den Wärmetauscher hindurch ermöglicht, daß die Leitungsmittel in der Form von im wesentlichen horizontalen, parallelen Wasserrohren (60) sind, daß der Brenner (51) unmittelbar über diesen Rohren und der Kondensatabfluß (75) unterhalb der Rohre liegt.

8. Boiler nach Anspruch 7, dadurch gekennzeichnet, daß die Wasserrohre (81) in einer Matrix angeordnet sind, die eine Vielzahl von eng beeinander liegenden, aufrechtstehenden parallelen Rippen (82) aufweist, die alle von den Wasserrohren gekreuzt werden und so eine gemeinsame vergrößerte Oberfläche bilden.

9. Boiler nach Anspruch 7 oder Anspruch 8, gekennzeichnet durch einen unterhalb des Brenners (51) angeordneten, sich nach unten verjüngender Trog (77), der zum Rauchgasauslaß (76, 89) und zum Kondensatabfluß (75; 90) führt, durch den Rauchgasauslaß und den Kondensatabfluß, die unmittelbar vom Boden der sich verjüngenden Wanne (85) weg führen.

10. Boiler nach Anspruch 9, dadurch gekennzeichnet, daß der Trog (85) den Wärmetauscher enthält.

11. Boiler nach Anspruch 10, dadurch gekennzeichnet, daß die Wärmetauscherrohre (86) sich zwischen den Enden des Trogs (85) und parallel zu den zusammenlaufenden Seiten des Trogs erstrecken.

12. Boiler nach Anspruch 11, dadurch gekennzeichnet, daß die Wasserrohre (86) im wesentlichen in Reihen angeordnet sind, von denen jede, ausgenommen die oberste, eine kleinere Anzahl von Rohren als die nächste Reihe über ihr enthält.

13. Boiler nach Anspruch 12, dadurch gekennzeichnet, daß seine Wassereinlaß- (88) und -auslaßmittel (87) jeweils mit einem entsprechenden Wasserrohr (86) in der untersten Reihe und einem Rohr in der obersten Reihe verbunden ist, wobei die Wasserrohre an ihren Enden miteinander derart verbunden sind, daß das Wasser eine Folge von Durchgängen durch den Wärmetauscher macht.

14. Boiler nach einem der Ansprüche 7 bis 13, dadurch gekennzeichnet, daß die Wasserrohre (60) zwischen einem Paar von Rauchgassammlern (56, 57) verbunden sind.

15. Boiler nach Anspruch 14, dadurch gekennzeichnet, daß der Wärmetauscher aus einem Paar von Rauchgassammlern (56, 57) besteht, die durch horizontale Zugstangen (58) mit den Wasserrohren (60), die sich zwischen den Rauchgassammlern erstrecken, verbunden sind.

16. Boiler nach Anspruch 1, dadurch gekennzeichnet, daß der Wärmetauscher Wasserrohre (138) enthält, die sich zwischen einem Paar paralleler, aufrechtstehender Sammelplatten (134) erstrecken.

17. Boiler nach Anspruch 1, dadurch gekennzeichnet, daß die Leitungsmittel eine Vielzahl von vertikalen Rohren (159) aufweisen, die die heißen Verbrennungsprodukte zum Rauchgasauslaß (151) führen, der in einer Kammer liegt, die von einem Wassererwärmungsraum (158) getrennt und oberhalb davon angeordnet ist und durch den sich die vertikalen Rohre erstrecken.

**Revendications**

1. Chaudière à eau chaude, à condensation, à gaz comprenant un échangeur de chaleur unique ou principal (101, 50) comportant une chambre de combustion et des conduites (12, 60, 81, 86, 138, 159) prévues pour assurer l'écoulement de l'eau et des produits de combustion chauds en contact direct avec les côtés opposés de leurs parois et dans un mode d'écoulement en substance transversal, de sorte qu'en service, la chambre de combustion et l'eau ne sont séparées que par les parois des conduites, un brûleur à gaz (24, 51, 130) dans l'échangeur de chaleur ou tout près de celui-ci, à même de diriger une flamme de gaz directement vers les conduites adjacentes et dans une ou plusieurs directions autres que la direction dirigée vers le haut, un dispositif d'admission d'air comprenant un ventilateur (27, 54, 142) destiné à fournir un tirage d'air forcé au brûleur et une sortie pour les fumées (35, 76, 89, 151) partant de la chambre de combustion, caractérisée en ce qu'une sortie pour le condensat (37, 75, 90, 149) est prévue en dessous de la chambre de combustion, les parois des conduites (12, 60, 81, 86, 138, 159) étant aussi minces que la structure le permet, l'échangeur de chaleur étant tel que le trajet pour les produits de combustion est un trajet libre et est dirigé, dans une direction autre que vers le haut, vers la sortie des fumées, et la chambre de combustion étant en substance dépourvue d'obstacles en dessous de l'échangeur de chaleur unique ou principal de manière à fournir un trajet d'échappement vers le bas libre pour l'eau condensée dans cet échangeur de chaleur en direction de l'évacuation du condensat.

2. Chaudière suivant la revendication 1, caractérisée en ce que les conduites (12, 60, 81, 86) de l'échangeur de chaleur comprennent des tubes à surface étendue (14, 16, 82).

3. Chaudière suivant la revendication 1 ou 2, caractérisée en ce que les conduites (12) comprennent un serpentin hélicoïdal, le brûleur (24) étant disposé coaxialement au serpentin de manière à diriger une flamme radialement vers le serpentin.

4. Chaudière suivant la revendication 3, caractérisée en ce que le serpentin hélicoïdal (12) a la forme de plusieurs serpentins imbriqués les uns dans les autres.

5. Chaudière suivant la revendication 3 ou 4, caractérisée en ce que l'axe commun du serpentin échangeur de chaleur (12) et du brûleur (24) est vertical.

6. Chaudière suivant la revendication 1 ou 2, caractérisée en ce que l'échangeur du chaleur (10, 50) comporte deux collecteurs (18, 20 ou 56, 57) disposés chacun à une extrémité des conduites (12, 63).

7. Chaudière suivant la revendication 1 ou 2, caractérisée en ce que l'échangeur de chaleur (50) est ouvert à son extrémité supérieure et à son extrémité inférieure pour permettre le passage libre des produits de combustion chauds qui traversent directement l'échangeur de chaleur, les conduites ayant la forme de tubes d'eau parallèles en substance horizontaux (60, 81, 86), le brûleur (51) étant disposé immédiatement au-dessus de ces tubes et l'évacuation de condensat (75) étant prévue en dessous des tubes.

8. Chaudière suivant la revendication 7, caractérisée en ce que les tubes d'eau (81) sont disposés suivant une matrice comprenant un grand nombre d'ailettes parallèles verticales (82) étroitement espacées qui sont traversées par les tubes d'eau pour constituer une surface étendue commune pour ces tubes d'eau.

9. Chaudière suivant la revendication 7 ou 8, caractérisée en ce qu'elle comporte, en dessous du brûleur (51), une auge convergeant vers le bas (77, 85) qui aboutit à la sortie (76, 89) pour les fumées et à l'évacuation de condensat (75, 90), la sortie pour les fumées et l'évacuation de condensat partant directement du fond de l'auge convergente.

10. Chaudière suivant la revendication 9, caractérisée en ce que l'auge (85) contient l'échangeur de chaleur.

11. Chaudière suivant la revendication 10, caractérisée en ce que les tubes d'eau (86) s'étendent entre les extrémités de l'auge (85) et parallèlement aux côtés convergeants de cette auge.

12. Chaudière suivant la revendication 11, caractérisée en ce que les tubes d'eau (86) sont disposés en substance en rangées, chaque rangée à l'exception de la rangée supérieure contenant un nombre de tubes inférieur à celui de la rangée surjacente.

13. Chaudière suivant la revendication 12, caractérisée en ce que son entrée d'eau (88) et sa sortie d'eau (87) sont raccordées chacune à un tube d'eau correspondant (86) de la rangée inférieure et de la rangée supérieure, les tubes d'eau étant raccordés les uns aux autres à leurs extrémités de sorte que l'eau effectue une succession de passes à travers l'échangeur de chaleur.

14. Chaudière suivant l'une quelconque des revendications 7 à 13, caractérisée en ce que les tubes d'eau (60) sont raccordés entre deux collecteurs (56, 57).

15. Chaudière suivant la revendication 14, caractérisée en ce que l'échangeur de chaleur comprend les deux collecteurs (56, 57) reliés l'un à l'autre par des tirants horizontaux (58), les tubes d'eau (60) s'étendant entre les collecteurs.

16. Chaudière suivant la revendication 1, caractérisée en ce que l'échangeur de chaleur comprend les tubes d'eau (138) qui s'étendent entre deux plaques de collecteur verticales parallèles (134).

17. Chaudière suivant la revendication 1, caractérisée en ce que les conduites comprennent plusieurs tubes verticaux (159) livrant passage aux produits de combustion chauds vers la sortie des fumées (151), celles-ci, se trouvant dans un chambre séparée d'un espace de chauffage d'eau (158) qui se trouve au-dessus de cette chambre et que les tubes verticaux traversent.

# FIG.1

*FIG.2*

*FIG.3*

*FIG.4*

# FIG.5

**FIG.6**

**FIG.7**

## FIG.8

## FIG.9

FIG.10

FIG.11

FIG.12

0027055

FIG.13